# EUROPEAN PATENT SPECIFICATION

(11) **EP 4 629 727 B1**
(45) Date of publication and mention of the grant of the patent: **28.10.2026**
(21) Application number: 25179889.8
(22) Date of filing: 30.03.2020
(51) Int. Cl.: H04W 72/0453, H04W 72/20

(54) **COMMUNICATION METHOD, COMMUNICATION APPARATUS, AND READABLE STORAGE MEDIUM**
KOMMUNIKATIONSVERFAHREN, KOMMUNIKATIONSVORRICHTUNG UND LESBARES SPEICHERMEDIUM
PROCÉDÉ DE COMMUNICATION, APPAREIL DE COMMUNICATION ET SUPPORT D'INFORMATIONS LISIBLE

(43) Date of publication of application: 08.10.2025
(62) Document number(s) of the earlier application(s) in accordance with Art. 76 EPC: 20928964.4 / 4 114 108
(73) Proprietor: Huawei Technologies Co., Ltd., Shenzhen, Guangdong 518129 (CN)
(72) Inventor: WANG, Hong, Shenzhen, Guangdong 518129 (CN); SHAN, Baokun, Shenzhen, Guangdong 518129 (CN)
(74) Representative: MERH-IP Matias Erny Reichl Hoffmann Patentanwälte PartG mbB

(56) References cited:
- CN-A- 110 536 341
- CN-A- 110 798 891
- US-A1- 2016 094 358
- US-A1- 2019 075 585

## Description

### TECHNICAL FIELD

Embodiments of this application relate to communication technologies, and in particular, to a communication method, a communication apparatus, and a readable storage medium.

### BACKGROUND

A 5th generation (5th generation, 5G) communication system supports configuration of a bandwidth part (bandwidth part, BWP). A network device may flexibly adjust a bandwidth based on service data of a terminal device, to reduce power consumption of the terminal device. BWPs include an initial BWP (initial BWP) and a dedicated BWP (dedicated BWP). When the terminal device is in a radio resource control (radio resource control, RRC) idle mode or an RRC inactive mode, the network device configures, based on a system message, the initial BWP for initial access of the terminal device. When the terminal device is in an RRC connected mode, the network device configures one or more dedicated BWPs for the terminal device. Terminal devices with reduced terminal device capabilities, complexity, and power consumption are introduced to the 5G communication system. These terminal devices may be referred to as light terminal devices or reduced-capacity terminal devices. These terminal devices may be used in, for example, an Internet of Things scenario. In the Internet of Things scenario, there are a large quantity of terminal devices, and the terminal devices may communicate with each other on a small bandwidth.

When the network device uses a same transmission configuration to transmit information to terminal devices having different service requirements, a problem that the transmission configuration may not match actual requirements of the terminal devices is caused. Consequently, time-frequency resources are wasted and/or power consumption of the terminal devices is increased.
Document CN 110 536 341 A generally discloses a network information reporting method and device, a user terminal, a service node and a medium. The method comprises the following steps: when a user terminal works in a first type of network, detecting a cell of a second type of network; and reporting cell network information to a service node of the first type of network, wherein the cell network information comprises detected network information corresponding to a target cell of the second type of network.
Document US 2019/075585 A1 generally relates to a pre-5th-generation (5G) or 5G communication system to be provided for supporting higher data rates beyond 4th-generation (4G) communication system such as long term evolution (LTE). A terminal in a wireless communication system is provided. The terminal includes a transceiver; and at least one processor configured to: receive, from a base station, configuration information for a bandwidth part, and receive, from the base station, information for a resource configuration within the bandwidth part.
Document US 2016/094358 A1 generally relates to a communication technology and system converging the fifth generation (5G) communication system for supporting a data rate higher than that of the 4G system with the IoT technology. Further, the present invention is applicable to the intelligent services based on the 5G communication and IoT technologies (e.g., smart home, smart building, smart city, smart car or connected car, health care, digital education, retail, security, and safety services). In more detail, a broadcast resource congestion control method of a multicell/multicast coordination entity (MCE) includes receiving a message including multimedia broadcast and multicast service (MBMS) congestion information from a base station, selecting an MBMS service to be controlled based on the MBMS congestion information, and transmitting a scheduling message including first control information related to the selected MBMS service to the base station.
Document CN 110 798 891 A generally provides an uplink transmission configuration method, device and equipment, and relates to the field of communication. The uplink transmission configuration method is applied to user equipment, and comprises the following steps: obtaining associated information sent by network equipment, the associated information being associated information between different time-frequency resource regions and transmission configuration parameters; determining a target time-frequency resource area of uplink transmission; and obtaining a transmission configuration parameter corresponding to the target time-frequency resource region according to the associated information and the target time-frequency resource region.

### SUMMARY

Embodiments of this application provide a communication method, a communication apparatus, and a readable storage medium, to resolve a current problem of wasting time-frequency resources and/or increasing power consumption of a terminal device. In particular, this application provides communication methods, corresponding communication apparatuses, and a readable storage medium, having the features of respective independent claims. The dependent claims relate to preferred embodiments.

According to a first aspect, an embodiment of this application provides a communication method, where the method may be applied to a network device, and the method includes:
sending a configuration information set to a terminal device, where the configuration information set includes at least one piece of configuration information, the configuration information includes transmission configuration information and frequency domain information, and the transmission configuration information is associated with the frequency domain information; receiving assistance information of the terminal device, where the assistance information is used to determine target frequency domain information from the frequency domain information; and sending a paging message to the terminal device based on the target frequency domain information.

In the method, the network device may learn of, based on the assistance information of the terminal device, a transmission configuration actually required by the terminal device. The network device may determine, based on the assistance information, the target frequency domain information associated with the assistance information, and send the paging message to the terminal device based on the target frequency domain information and the transmission configuration associated with the target frequency domain information, so that a transmission manner of the paging message matches an actual requirement of the terminal device. In this way, a problem of wasting time-frequency resources and/or increasing power consumption of the terminal device is avoided.

In a possible design, the method further includes:
receiving the assistance information from the terminal device; receiving a second message from a core network device, where the second message includes the assistance information; or receiving a third message from a target network device, where the third message includes the assistance information.

In the foregoing method, the terminal device may transparently transmit the assistance information to the core network device via the network device, and the assistance information is included in the second message by the core network device, to enable the network device to determine the target frequency domain information based on the assistance information and a transmission configuration set, and sends, based on a requirement of the terminal device, the first message to the terminal device in an RRC idle mode in a frequency domain resource indicated by the target frequency domain information. In this way, time-frequency resource consumption or the power consumption of the terminal device can be reduced. Alternatively, the terminal device may send the assistance information to the network device, the assistance information is stored and sent to the core network device by the network device, and the assistance information is included in the second message by the core network device, to enable the network device to determine the target frequency domain information based on the assistance information and a transmission configuration set, and sends, based on a requirement of the terminal device, the first message to the terminal device in an RRC idle mode in a frequency domain resource indicated by the target frequency domain information. In this way, time-frequency resource consumption or the power consumption of the terminal device can be reduced. Alternatively, the terminal device sends the assistance information to the target network device other than the network device, and the assistance information is sent to the network device by the target network device, to enable the target network device and the network device to separately determine the target frequency domain information based on the assistance information and the transmission configuration set, and sends, based on a requirement of the terminal device, the first message to the terminal device in an RRC inactive mode in a frequency domain resource indicated by the target frequency domain information. In this way, time-frequency resource consumption or the power consumption of the terminal device can be reduced.

According to a second aspect, an embodiment of this application provides a communication method, where the method may be applied to a terminal device, and the method includes:
receiving a configuration information set from a first network device, where the configuration information set includes at least one piece of configuration information, the configuration information includes transmission configuration information and frequency domain information, and the transmission configuration information is associated with the frequency domain information; determining target frequency domain information based on the configuration information set and assistance information; and receiving a first message from the first network device based on the target frequency domain information.

In the method, the terminal device may determine, based on the assistance information and the configuration information set sent by the first network device, the target frequency domain information associated with the assistance information, and receives the first message from the first network device based on the target frequency domain information and a transmission configuration associated with the target frequency domain information, so that a transmission manner of the first message matches an actual requirement of the terminal device. In this way, a problem of wasting time-frequency resources and/or increasing power consumption of the terminal device is avoided.

In a possible design, the method further includes:
sending the assistance information to the first network device or a second network device; or sending a fourth message to a core network device, where the fourth message includes the assistance information.

In the foregoing method, the terminal device may transparently transmit the assistance information to the core network device via the network device, and the assistance information is included in the second message by the core network device, to enable the network device to determine the target frequency domain information based on the assistance information and a transmission configuration set, and sends, based on a requirement of the terminal device, the first message to the terminal device in an RRC idle mode in a frequency domain resource indicated by the target frequency domain information. In this way, time-frequency resource consumption or the power consumption of the terminal device can be reduced. Alternatively, the terminal device may send the assistance information to the network device, the assistance information is stored and sent to the core network device by the network device, and the assistance information is included in the second message by the core network device, to enable the network device to determine the target frequency domain information based on the assistance information and a transmission configuration set, and sends, based on a requirement of the terminal device, the first message to the terminal device in an RRC idle mode in a frequency domain resource indicated by the target frequency domain information. In this way, time-frequency resource consumption or the power consumption of the terminal device can be reduced. Alternatively, the terminal device sends the assistance information to the first network device, and the assistance information is sent to the second network device by the first network device, to enable the first network device and the first network device to separately determine the target frequency domain information based on the assistance information and a transmission configuration set, and sends, based on a requirement of the terminal device, the first message to the terminal device in an RRC inactive mode in a frequency domain resource indicated by the target frequency domain information. In this way, time-frequency resource consumption or the power consumption of the terminal device can be reduced.

In the first aspect and the second aspect, in a possible design, the transmission configuration information includes at least one of the following:
an indication indicating whether repeated transmission is performed, a quantity of repeated transmission times, a threshold of a quantity of repeated transmission times, a level of a quantity of repeated transmission times, a coverage enhancement level, a DRX cycle, a DRX cycle threshold, a paging cycle, and a paging cycle threshold.

By using transmission configuration information related to repeated transmission, the terminal device may select, based on a requirement of repeated transmission, frequency domain information associated with a repeated transmission configuration required by the terminal device, to perform information transmission with the network device in a frequency domain resource or a frequency domain location indicated by the frequency domain information and based on transmission configuration information required by the terminal device. In this way, the terminal device can perform information transmission based on the configuration of repeated transmission actually required by the terminal device, to prevent the network device from using a same configuration of repeated transmission for different terminal devices in a cell, thereby improving resource utilization and reducing power consumption of the network device and the terminal device.

By using transmission configuration information related to a DRX cycle, the terminal device may select, based on a requirement of the DRX cycle, frequency domain information associated with a DRX cycle configuration required by the terminal device, to perform information transmission with the network device in a frequency domain resource or a frequency domain location indicated by the frequency domain information and based on transmission configuration information required by the terminal device. In this way, the terminal device can perform information transmission based on the configuration of the DRX cycle actually required by the terminal device, to prevent different terminal devices in a cell from using a same DRX cycle, thereby reducing power consumption of a terminal device that requires a long DRX cycle.

By using transmission configuration information related to a paging cycle, the terminal device may select, based on a requirement of the paging cycle, frequency domain information associated with a paging cycle configuration required by the terminal device, to perform information transmission with the network device in a frequency domain resource or a frequency domain location indicated by the frequency domain information and based on transmission configuration information required by the terminal device. In this way, the terminal device can perform information transmission based on the configuration of the paging cycle actually required by the terminal device, thereby avoiding a resource waste and/or a power consumption increase.

In the first aspect and the second aspect, in a possible design, the terminal device is in the RRC idle mode or the RRC inactive mode.

According to a third aspect, an embodiment of this application provides a communication method, where the method may be applied to a core network device, and the method includes:
receiving assistance information of a terminal device, where the assistance information is used to determine target frequency domain information, and the target frequency domain information is used to send a first message; and sending a second message to a first network device, where the second message includes the assistance information.

In the method, the terminal device sends the assistance information to the core network device. Then the core network device may send the assistance information to the network device. The network device may determine, based on the assistance information, the target frequency domain information associated with the assistance information, and send the first message to the terminal device based on the target frequency domain information and a transmission configuration associated with the target frequency domain information, so that a transmission manner of the first message matches an actual requirement of the terminal device. In this way, a problem of wasting time-frequency resources and/or increasing power consumption of the terminal device is avoided.

In a possible design, the method further includes:
receiving the assistance information from the first network device or a second network device; or receiving a fourth message from the terminal device, where the fourth message includes the assistance information.

In the foregoing method, the terminal device may transparently transmit the assistance information to the core network device via the network device, and the assistance information is included in the second message by the core network device, to enable the network device to determine the target frequency domain information based on the assistance information and a transmission configuration set, and sends, based on a requirement of the terminal device, the first message to the terminal device in an RRC idle mode in a frequency domain resource indicated by the target frequency domain information. In this way, time-frequency resource consumption or the power consumption of the terminal device can be reduced. Alternatively, the terminal device may send the assistance information to the network device, the assistance information is stored and sent to the core network device by the network device, and the assistance information is included in the second message by the core network device, to enable the network device to determine the target frequency domain information based on the assistance information and a transmission configuration set, and sends, based on a requirement of the terminal device, the first message to the terminal device in an RRC idle mode in a frequency domain resource indicated by the target frequency domain information. In this way, time-frequency resource consumption or the power consumption of the terminal device can be reduced.

In the first aspect, the second aspect, and the third aspect, in a possible design, the assistance information includes at least one of the following:
an indication indicating whether repeated transmission is performed, a quantity of repeated transmission times, a level of a quantity of repeated transmission times, a coverage enhancement level, a DRX cycle, and a paging cycle.

The terminal device may notify the network device of an actual preferred transmission configuration of the terminal device by sending the assistance information. The network device may transmit information to the terminal device in an associated frequency domain resource or frequency domain location based on the assistance information, thereby meeting an actual requirement of the terminal device, and avoiding a problem of wasting time-frequency resources and/or increasing power consumption of the terminal device.

In the first aspect, the second aspect, and the third aspect, in a possible design, the frequency domain information includes at least one of the following:
carrier information, BWP information, and narrowband information.

When the frequency domain information includes one type of the foregoing information, the method in this application can be applied to a scenario in which the type of the information is used.

According to a fourth aspect, an embodiment of this application provides a communication apparatus, where the communication apparatus includes a communication unit and a processing unit.

The processing unit is configured to send a configuration information set to a terminal device via the communication unit, where the configuration information set includes at least one piece of configuration information, the configuration information includes transmission configuration information and frequency domain information, and the transmission configuration information is associated with the frequency domain information.

The communication unit is configured to receive assistance information of the terminal device, where the assistance information is used to determine target frequency domain information from the frequency domain information.

The processing unit is further configured to send a first message to the terminal device via the communication unit based on the target frequency domain information.

In a possible design, the transmission configuration information includes at least one of the following:
an indication indicating whether repeated transmission is performed, a quantity of repeated transmission times, a threshold of a quantity of repeated transmission times, a level of a quantity of repeated transmission times, a coverage enhancement level, a DRX cycle, a DRX cycle threshold, a paging cycle, and a paging cycle threshold.

In a possible design, the assistance information includes at least one of the following:
an indication indicating whether repeated transmission is performed, a quantity of repeated transmission times, a level of a quantity of repeated transmission times, a coverage enhancement level, a DRX cycle, and a paging cycle.

In a possible design, the communication unit is further configured to:
receive the assistance information from the terminal device; receive a second message from a core network device, where the second message includes the assistance information; or receive a third message from a target network device, where the third message includes the assistance information.

In a possible design, the frequency domain information includes at least one of the following:
carrier information, BWP information, and narrowband information.

In a possible design, the terminal device is in an RRC idle mode or an RRC inactive mode.

According to a fifth aspect, an embodiment of this application provides a communication apparatus, where the communication apparatus includes a communication unit and a processing unit.

The communication unit is configured to receive a configuration information set from a first network device, where the configuration information set includes at least one piece of configuration information, the configuration information includes transmission configuration information and frequency domain information, and the transmission configuration information is associated with the frequency domain information.

The processing unit is configured to: determine target frequency domain information based on the configuration information set and assistance information; and receive a first message from the first network device via the communication unit based on the target frequency domain information.

In a possible design, the transmission configuration information includes at least one of the following:
an indication indicating whether repeated transmission is performed, a quantity of repeated transmission times, a threshold of a quantity of repeated transmission times, a level of a quantity of repeated transmission times, a coverage enhancement level, a DRX cycle, a DRX cycle threshold, a paging cycle, and a paging cycle threshold.

In a possible design, the assistance information includes at least one of the following:
an indication indicating whether repeated transmission is performed, a quantity of repeated transmission times, a level of a quantity of repeated transmission times, a coverage enhancement level, a DRX cycle, and a paging cycle.

In a possible design, the processing unit is further configured to:
send the assistance information to the first network device or a second network device via the communication unit; or send a fourth message to a core network device via the communication unit, where the fourth message includes the assistance information.

In a possible design, the frequency domain information includes at least one of the following:
carrier information, bandwidth part BWP information, and narrowband information.

In a possible design, the communication apparatus is in an RRC idle mode or an RRC inactive mode.

According to a sixth aspect, an embodiment of this application provides a communication apparatus, where the communication apparatus includes a communication unit and a processing unit.

The communication unit is configured to receive assistance information of a terminal device, where the assistance information is used to determine target frequency domain information, and the target frequency domain information is used to send a first message.

The processing unit is configured to send a second message to a first network device via the communication unit, where the second message includes the assistance information.

In a possible design, the communication unit is further configured to:
receive the assistance information from the first network device or a second network device; or receive a fourth message from the terminal device, where the fourth message includes the assistance information.

In a possible design, the assistance information includes at least any one of the following:
an indication indicating whether repeated transmission is performed, a quantity of repeated transmission times, a level of a quantity of repeated transmission times, a coverage enhancement level, a DRX cycle, and a paging cycle.

In a possible design, the frequency domain information includes at least any one of the following:
carrier information, BWP information, and narrowband information.

According to a seventh aspect, an embodiment of this application provides a communication apparatus, where the communication apparatus includes a processor and a communication interface.

The communication interface is configured to implement connection and communication between the communication apparatus and a peripheral.

The processor is configured to implement the method according to the first aspect.

In a possible design, the communication apparatus further includes a memory.

The memory is configured to store a computer program. The processor executes the computer program stored in the memory, to enable the apparatus to perform the method according to the first aspect.

In a possible design, the communication apparatus further includes a transceiver.

The transceiver is configured to receive and send a message.

According to an eighth aspect, an embodiment of this application provides a communication apparatus, where the communication apparatus includes a processor and a communication interface.

The communication interface is configured to implement connection and communication between the communication apparatus and a peripheral.

The processor is configured to implement the method according to the second aspect.

In a possible design, the communication apparatus further includes a memory.

The memory is configured to store a computer program. The processor executes the computer program stored in the memory, to enable the apparatus to perform the method according to the second aspect.

In a possible design, the communication apparatus further includes a transceiver.

The transceiver is configured to receive and send a message.

According to a ninth aspect, an embodiment of this application provides a communication apparatus, where the communication apparatus includes a processor and a communication interface.

The communication interface is configured to implement connection and communication between the communication apparatus and a peripheral.

The processor is configured to implement the method according to the third aspect.

In a possible design, the communication apparatus further includes a memory.

The memory is configured to store a computer program. The processor executes the computer program stored in the memory, to enable the apparatus to perform the method according to the third aspect.

In a possible design, the communication apparatus further includes a transceiver.

The transceiver is configured to receive and send a message.

According to a tenth aspect, an embodiment of this application provides a computer-readable storage medium, where the computer-readable storage medium stores a computer program; and when the computer program is run, the method according to the first aspect, the second aspect, or the third aspect is implemented.

According to an eleventh aspect, an embodiment of this application provides a chip, where the chip includes a processor and an interface.

The processor is configured to read instructions, to implement the information processing method according to the first aspect, the second aspect, or the third aspect.

According to a twelfth aspect, an embodiment of this application provides a computer program product, where the computer program product includes computer program code; and when the computer program code is executed by a computer, the computer is enabled to perform the method according to the first aspect, the second aspect, or the third aspect.

According to a thirteenth aspect, an embodiment of this application provides a communication system, where the communication system includes the communication apparatus according to the seventh aspect, the communication apparatus according to the eighth aspect, and the communication apparatus according to the ninth aspect.

### BRIEF DESCRIPTION OF DRAWINGS

FIG. 1 is a diagram of an example in which a terminal device uses an initial BWP and a dedicated BWP;
FIG. 2 shows an example of a DRX cycle;
FIG. 3 is a schematic diagram of an architecture of a mobile communication system to which an embodiment of this application is applied;
FIG. 4 is a schematic flowchart of a communication method provided in an embodiment of this application;
FIG. 5 is a flowchart of interaction between a network device and a terminal device;
FIG. 6 is another flowchart of interaction between a network device and a terminal device;
FIG. 7 is still another flowchart of interaction between a network device and a terminal device;
FIG. 8 is a diagram of a structure of modules of a communication apparatus provided in an embodiment of this application;
FIG. 9 is a diagram of a structure of modules of another communication apparatus provided in an embodiment of this application;
FIG. 10 is a diagram of a structure of modules of still another communication apparatus provided in an embodiment of this application; and
FIG. 11 is a schematic diagram of a structure of a communication apparatus provided in an embodiment of this application.

### DESCRIPTION OF EMBODIMENTS

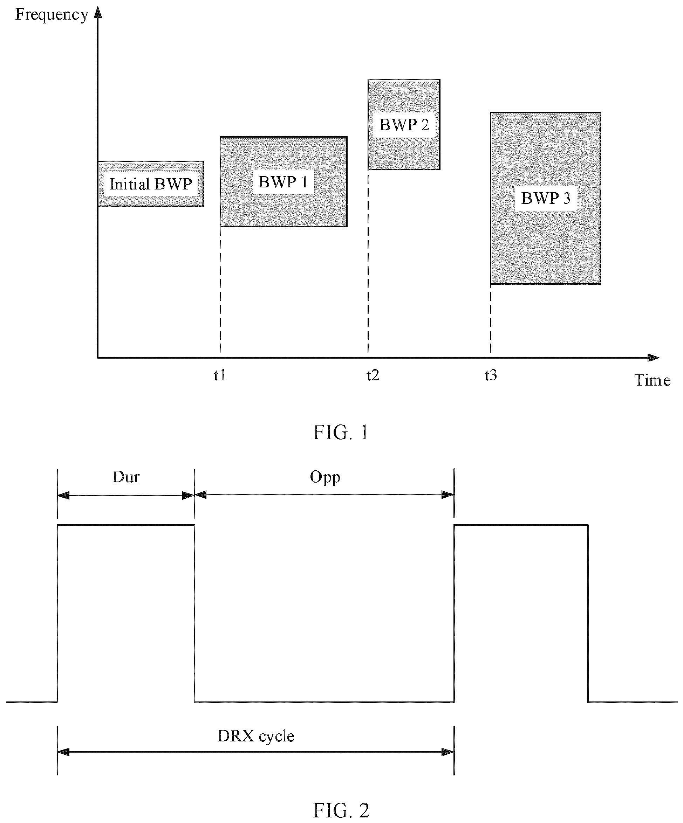

FIG. 1 is a diagram of an example in which a terminal device uses an initial BWP and a dedicated BWP. As shown in FIG. 1, when the terminal device is in an RRC idle mode and an RRC inactive mode, the terminal device accesses a network device by using the initial BWP. After the terminal device enters an RRC connected mode, the network device configures three dedicated BWPs for the terminal device, where the three dedicated BWPs include a BWP 1, a BWP 2, and a BWP 3. At a moment t1, the network device activates the BWP 1 for the terminal device. At a moment t2, the network device activates the BWP 2 for the terminal device. At a moment t3, the network device activates the BWP 3 for the terminal device. At a same moment, the terminal device has only one active dedicated BWP.

In a 5G communication system, a size of an initial BWP may be 5 MHz, 10 MHz, 15 MHz, or 20 MHz. An Internet of Things scenario includes a large quantity of terminal devices. In this scenario, there may be a case in which the large quantity of terminal devices simultaneously access a network device. In a possible design, for terminal devices in an RRC idle mode or an RRC inactive mode, the network device performs information transmission with the terminal devices based on a same transmission configuration by using these initial BWPs. In this manner, the transmission configuration based on which the network device performs information transmission may not match actual requirements of the terminal devices, thereby avoiding a waste of time-frequency resources and/or an increase in power consumption of the terminal devices.

For example, in the Internet of Things scenario, because a capability and complexity of a terminal device are reduced, uplink sending coverage (coverage) and downlink receiving coverage of the terminal device shrink. For example, for a normal terminal device, the terminal device may perform normal communication at a cell edge. However, for a reduced capability (reduced capability, Red-Cap) terminal device, because a receive antenna, a transmit antenna, power consumption, and the like of the terminal device are reduced, the Red-Cap terminal device at the cell edge may fail to perform normal communication. Therefore, a repeated transmission (repetition) mechanism needs to be introduced for a terminal device at a cell edge. To be specific, when sending a signal, the network device or the terminal device repeatedly transmits a same signal, message, signaling, or data, to expand the uplink sending coverage and downlink sending coverage. However, locations or motion statuses of different terminal devices may be different. For example, some terminal devices are located at a cell edge, and some other terminal devices are located at a cell center; some terminal devices move, and some other terminal devices are static. If the repeated transmission mechanism is applied to all the terminal devices, consumption of time-frequency resources is increased. For example, when a network device sends a paging message to a static terminal device located at the cell center, repeated transmission does not need to be applied; when the network device sends a paging message to a static terminal device located at the cell edge, repeated transmission needs to be applied. However, in the foregoing method, the network device does not distinguish the two types of terminal devices. To ensure that the two types of terminal devices can be paged, the network device applies repeated transmission to all terminal devices in a cell. For the network device, this manner of repeated transmission may cause a waste of time-frequency resources. For brevity of description, the repeated transmission means repeatedly sending a same message, to increase a receiving success rate of a receive end. Details are not described in the following embodiments again. It should be noted that a type of a terminal device that performs repeated transmission is not limited in this application, and a location of the terminal device that performs repeated transmission is not limited either.

For another example, to reduce power consumption of a terminal device, a 5G communication system supports a discontinuous reception (discontinuous reception, DRX) mechanism. When DRX is not configured for the terminal device, and when there is no uplink/downlink service data transmission between the terminal device and a network device, the terminal device is in an RRC idle mode or an RRC inactive mode. Because downlink data transmission from the network device is unpredictable, the terminal device in the mode needs to always monitor a paging message that may be sent by the network device. In most of time, the network device does not page the terminal device. This results in power consumption caused by monitoring the paging message by the terminal device. When the DRX is configured for the terminal device, the terminal device may periodically wake up to monitor the paging message. FIG. 2 shows an example of a DRX cycle. As shown in FIG. 2, a cycle in which a terminal device wakes up is the DRX cycle. Wake-up duration is referred to as Dur, and the terminal device monitors a paging message within the Dur duration. Duration in which the terminal device does not monitor the paging message is referred to as Opp.

Currently, there may be two DRX configuration manners. One is that a network device configures the DRX cycle by broadcasting a message, where the DRX cycle includes rf32, rf64, rf128, and rf256, rf is a radio frame (radio frame), and a length of one radio frame is 10 ms. Different network devices may broadcast different DRX cycles. In another manner, a core network configures a dedicated DRX cycle for the terminal device, where the dedicated DRX cycle also includes the foregoing values. In a possible design, if the dedicated DRX cycle is configured for the terminal device, the terminal device uses a smaller DRX cycle between the dedicated DRX cycle and a broadcast DRX cycle. In this design, a larger DRX cycle cannot be configured for a terminal device having a high requirement for power consumption, which increases power consumption of the terminal device.

In the foregoing design, that the network device performs information transmission with the terminal device based on a same transmission configuration causes a problem that time-frequency resources are wasted and/or power consumption of the terminal device increases. To resolve the problem, in embodiments of this application, information transmission is performed in a manner of selecting, based on assistance information of the terminal device, a transmission configuration that matches an actual requirement of the terminal device. In this way, a waste of time-frequency resources and an increase in power consumption of the terminal device are avoided.

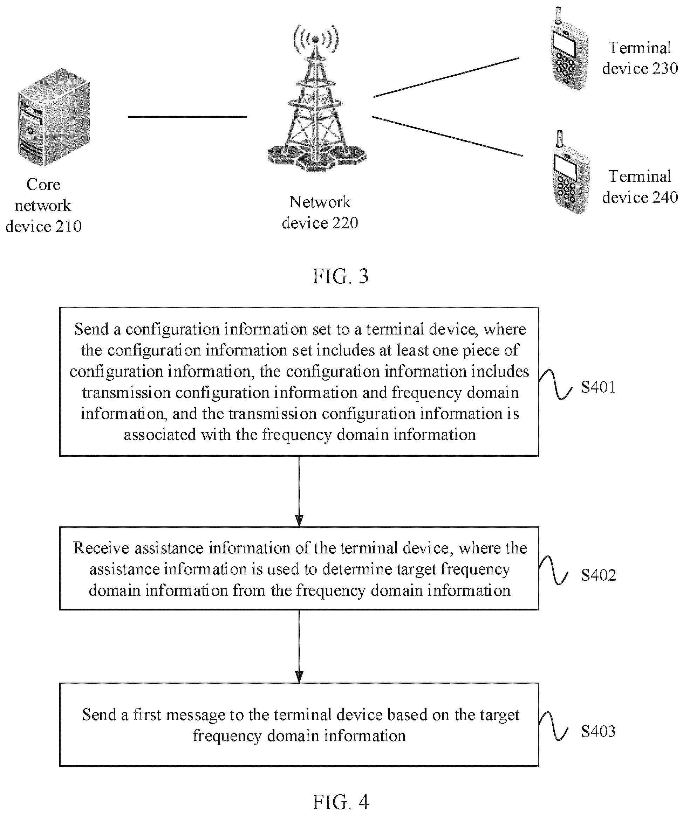

FIG. 3 is a schematic diagram of an architecture of a mobile communication system to which an embodiment of this application is applied. As shown in FIG. 3, the mobile communication system includes a core network device 210, a network device 220, and at least one terminal device (for example, a terminal device 230 and a terminal device 240 in FIG. 3). The terminal device is connected to the network device in a wireless manner, and the network device is connected to the core network device in a wireless manner or a wired manner. The core network device and the network device may be different physical devices independent of each other; functions of the core network device and logical functions of the network device may be integrated into a same physical device; or some functions of the core network device and some functions of the network device may be integrated into one physical device. The terminal device may be located at a fixed position, or may be mobile. FIG. 3 is merely a schematic diagram. The communication system may further include another network device. For example, the communication system may further include a wireless relay device and a wireless backhaul device, which are not drawn in FIG. 3. Quantities of core network devices, network devices, and terminal devices included in the mobile communication system are not limited in embodiments of this application.

The network device is an access device used by the terminal device to access the mobile communication system in a wireless manner. The network device may be a NodeB (NodeB), an evolved NodeB (eNodeB), an access node in a 5G mobile communication system, an access node in a future mobile communication system, an access node in a Wi-Fi system, or the like. A specific technology and a specific device form that are applied by the network device are not limited in embodiments of this application.

The terminal device may also be referred to as a terminal Terminal, user equipment (user equipment, UE), a mobile station (mobile station, MS), a mobile terminal (mobile terminal, MT), or the like. The terminal device may be a mobile phone (mobile phone), a tablet computer (Pad), a computer with a wireless sending/receiving function, a virtual reality (Virtual Reality, VR) terminal device, an augmented reality (Augmented Reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

For example, embodiments of this application are applicable to an Internet of Things scenario of a 5G communication system, or are applicable to an enhanced machine type communication (enhanced machine type communication, eMTC) scenario or a narrowband Internet of Things (narrowband Internet of things, NB-IoT) scenario of a 4G communication system. Similar to the Internet of Things scenario of the 5G communication system, in the eMTC scenario and the NB-IoT scenario, a large quantity of terminal devices with a low terminal capability, low complexity, and low power consumption need to access a network device.

Before the technical solutions in embodiments of this application are described, technical terms in embodiments of this application are first explained.

### 1. RRC idle mode

In an RRC idle mode, there is no logical connection between a terminal device and a network device at an RRC layer. The terminal device cannot perform uplink or downlink transmission of data and signaling with the network device, but can receive only a paging message and system information that are sent by the network device. In addition, in the RRC idle mode, there is no logical connection between the terminal device and the core network at the RRC layer either. Neither a core network nor the network device stores a context of the terminal device. When the terminal device needs to be paged, a paging message is initiated by the core network.

### 2. RRC inactive mode

In an RRC inactive mode, there is no logical connection between a terminal device and a network device at an RRC layer. The terminal device cannot perform uplink or downlink transmission of data and signaling with the network device, but can receive only a paging message and system information that are sent by the network device. In addition, in the RRC inactive mode, there has been a logical connection between the terminal device and a core network at the RRC layer. Both the core network and the network device store a context of the terminal device. When the terminal device needs to be paged, the core network sends paging-related data to the network device, and then the network device initiates the paging message.

### 3. DRX

DRX may be classified into idle DRX (Idle DRX, I-DRX) and connected DRX (Connected DRX, C-DRX). I-DRX means that a terminal device does not need to continuously monitor a paging message, so that power consumption of the terminal device can be reduced. C-DRX means that a terminal device does not need to continuously monitor control information for scheduling uplink/downlink data, so that power consumption of the terminal device can be reduced.

### Embodiment 1

FIG. 4 is a schematic flowchart of a communication method provided in an embodiment of this application. The method is performed by the foregoing network device. As shown in FIG. 4, the method includes the following steps.

S401: The network device sends a configuration information set to a terminal device, where the configuration information set includes at least one piece of configuration information, the configuration information includes transmission configuration information and frequency domain information, and the transmission configuration information is associated with the frequency domain information.

Specifically, the network device sends the configuration information set to the terminal device, to indicate a correspondence between the transmission configuration information and the frequency domain information to the terminal device. The configuration information set includes at least one piece of configuration information, and each piece of configuration information includes the transmission configuration information and the frequency domain information. In other words, the configuration information set may indicate one or more groups of correspondences between transmission configuration information and frequency domain information. The correspondence indicates that different frequency domain information corresponds to different transmission configurations, so that the terminal device may determine corresponding frequency domain information based on a preferred transmission configuration. For meanings of the transmission configuration information and the frequency domain information, refer to the following detailed descriptions.

Correspondingly, the terminal device receives the configuration information set, and determines the correspondence between the transmission configuration information and the frequency domain information based on the configuration information set.

Specifically, the transmission configuration information in the at least one piece of configuration information may be in one-to-one correspondence with the frequency domain information. For example, the configuration information set is a list shown in the following Table 1. Each row in the list represents one piece of configuration information, a left column in each row represents the transmission configuration information, and a right column indicates the frequency domain information. Transmission configuration information and frequency domain information in a same row are associated with each other. For example, transmission configuration information 1 is associated with frequency domain information 1.

**Table 1**

| Transmission configuration information | Frequency domain information |
|---|---|
| Transmission configuration information 1 | Frequency domain information 1 |
| Transmission configuration information 2 | Frequency domain information 2 |

The transmission configuration information is a configuration for transmission between the network device and the terminal device. For example, the transmission configuration information may indicate whether repeated transmission is performed. The frequency domain information may indicate a frequency domain resource or a frequency domain location. That the transmission configuration information is associated with the frequency domain information may mean that the transmission configuration indicated by the transmission configuration information is applicable to a frequency domain resource or a frequency domain location indicated by the frequency domain information associated with the transmission configuration information. For example, the transmission configuration information 1 indicates repeated transmission, frequency domain information associated with the transmission configuration information 1 is the frequency domain information 1, and the association relationship indicates that repeated transmission is applicable to a frequency domain resource or a frequency domain location indicated by the frequency domain information 1.

In a possible implementation, the network device sends a system message to the terminal device, where the system message includes the configuration information set.

In a possible implementation, the frequency domain resource or frequency domain location indicated by the frequency domain information may be at least one of the following:
(1) a BWP;
(2) an initial BWP;
(3) information about a narrowband; and
(4) information about a carrier.

In a possible implementation, the transmission configuration information may include at least one of the following:
an indication indicating whether repeated transmission is performed, a quantity of repeated transmission times, a threshold of a quantity of repeated transmission times, a level of a quantity of repeated transmission times, a coverage enhancement level (coverage enhancement level, CEL), a discontinuous reception (discontinuous reception, DRX) cycle, a DRX cycle threshold, a paging cycle, and a paging cycle threshold.

It should be noted that an association relationship between the transmission configuration information in the foregoing information and the frequency domain information may be an explicit association relationship. For example, the association relationship between the transmission configuration information and the frequency domain information is indicated by using a list in the foregoing example. Alternatively, an association relationship between the transmission configuration information and the frequency domain information may be an implicit association relationship. When the association relationship is implicit, a piece of frequency domain information in the list shown in Table 1 may not be directly associated with a piece of transmission configuration information.

The following separately describes the foregoing information.

### (1) Indication indicating whether repeated transmission is performed

In a possible implementation, the transmission configuration information may indicate that repeated transmission is applied. Correspondingly, that a piece of frequency domain information is associated with the transmission configuration information indicates that repeated transmission is used for information transmission in a frequency domain resource or a frequency domain location indicated by the frequency domain information.

In another possible implementation, the transmission configuration information may indicate that repeated transmission is not applied. Correspondingly, that a piece of frequency domain information is associated with the transmission configuration information indicates that repeated transmission is not used for information transmission in a frequency domain resource or a frequency domain location indicated by the frequency domain information.

Optionally, in the configuration information set, the network device may explicitly indicate the association relationship between the transmission configuration information and the frequency domain information, or may partially implicitly indicate the association relationship between the transmission configuration information and the frequency domain information.

In an example, as shown in the following table, the configuration information set includes three pieces of frequency domain information (freq 1, freq 2, and freq 3) and two pieces of transmission configuration information (a repeated transmission indication rep-enabled and a non-repeated transmission indication rep-disabled). The freq 1 is associated with the rep-enabled, which indicates that repeated transmission is applied in a frequency domain resource or a frequency domain location indicated by the freq 1. The freq 2 is associated with the rep-disabled, which indicates that repeated transmission is not applied in a frequency domain resource or a frequency domain location indicated by the freq 2. The freq 3 is associated with the transmission configuration information rep-enabled, which indicates that repeated transmission is applied in a frequency domain resource or a frequency domain location indicated by the freq 3. In this example, the association relationship between the transmission configuration information and the frequency domain information is explicitly represented in one-to-one correspondence between the frequency domain information and the transmission configuration information.

| Frequency domain information | Transmission configuration information |
|---|---|
| freq 1 | rep-enabled |
| freq 2 | rep-disabled |
| freq 3 | rep-enabled |

In another example, as shown in the following table, the configuration information set includes three pieces of frequency domain information (freq 1, freq 2, and freq 3) and one piece of transmission configuration information (a repeated transmission indication rep-enabled). The freq 1 and the freq 3 are separately associated with the rep-enabled, which indicates that repeated transmission is applied in frequency domain resources or frequency domain locations indicated by the freq 1 and the freq 3. In addition, transmission configuration information associated with the freq 2 is not explicitly configured for the freq 2, which indicates that repeated transmission is not applied in a frequency domain resource or a frequency domain location indicated by the freq 2. In this example, an association relationship between the freq 2 and the transmission configuration information is provided in an implicit manner.

| Frequency domain information | Transmission configuration information |
|---|---|
| freq 1 | rep-enabled |
| freq 2 | |
| freq 3 | rep-enabled |

In still another example, as shown in the following table, the configuration information set includes three pieces of frequency domain information (freq 1, freq 2, and freq 3) and one piece of transmission configuration information (a non-repeated transmission indication rep-disabled). The freq 1 and the freq 3 are separately associated with the rep-disabled, which indicates that repeated transmission is not applied in frequency domain resources or frequency domain locations indicated by the freq 1 and the freq 3. In addition, transmission configuration information associated with the freq 2 is not explicitly configured for the freq 2, which indicates that repeated transmission is applied in a frequency domain resource or a frequency domain location indicated by the freq 2. In this example, an association relationship between the freq 2 and the transmission configuration information is provided in an implicit manner.

| Frequency domain information | Transmission configuration information |
|---|---|
| freq 1 | rep-disabled |
| freq 2 | |
| freq 3 | rep-disabled |

### (2) Quantity of repeated transmission times (repetition number)

The transmission configuration information may indicate a quantity of repeated transmission times. Correspondingly, that a piece of frequency domain information is associated with the transmission configuration information indicates that a quantity of times of repeated transmission performed in a frequency domain resource or a frequency domain location indicated by the frequency domain information is the quantity of repeated transmission times indicated by the transmission configuration information.

In an example, each piece of frequency domain information in the configuration information set may be explicitly associated with a quantity of repeated transmission times, which indicates that a terminal device that needs to perform repeated transmission for the quantity of repeated transmission times uses a frequency domain resource or a frequency domain location indicated by the associated frequency domain information.

In another example, as shown in the following table, the configuration information set includes three pieces of frequency domain information (freq 1, freq 2, and freq 3) and three pieces of transmission configuration information (quantities of repeated transmission times rep 0 and rep 1). The freq 1 is associated with the quantity of repeated transmission times rep 0, which indicates that a terminal device that needs to perform repeated transmission for rep 0 times uses a frequency domain resource or a frequency domain location indicated by the freq 1. The freq 3 is associated with the quantity of repeated transmission times rep 3, which indicates that a terminal device that needs to perform repeated transmission for rep 1 times uses a frequency domain resource or a frequency domain location indicated by the freq 3. A terminal device that needs to perform repeated transmission for another quantity of times uses a frequency domain resource or a frequency domain location indicated by the freq 2. In this example, the freq 1 and the freq 3 are in one-to-one correspondence with the rep 0 and the rep 1, and association relationships between the frequency domain information and the transmission configuration information are explicitly provided. The freq 2 is implicitly associated with transmission configuration information.

| Frequency domain information | Transmission configuration information |
|---|---|
| freq 1 | rep 0 |
| freq 2 | |
| freq 3 | rep 1 |

### (3) Threshold of a quantity of repeated transmission times

The transmission configuration information may indicate a threshold of a quantity of repeated transmission times, and the threshold of the quantity of repeated transmission times is used to represent an interval of a quantity of transmission times. Correspondingly, that a piece of frequency domain information is associated with the transmission configuration information indicates that a quantity of times of repeated transmission performed in a frequency domain resource or a frequency domain location indicated by the frequency domain information is within the interval represented by the threshold of the quantity of repeated transmission times.

Optionally, the threshold of the quantity of repeated transmission times may be an upper limit of the represented interval, and/or a lower limit of the represented interval.

In an example, as shown in the following table, the configuration information set includes three pieces of frequency domain information (freq 1, freq 2, and freq 3) and two pieces of transmission configuration information (thresholds of the quantity of repeated transmission times threshold 0 and threshold 1). The freq 1 is associated with the threshold "threshold 0", which indicates that a terminal device that needs to perform repeated transmission for a quantity of times less than or equal to the threshold 0 uses a frequency domain resource or a frequency domain location indicated by the freq 1. The freq 2 is associated with the threshold "threshold 12", which indicates that a terminal device that needs to perform repeated transmission for a quantity of times between the threshold 0 and the threshold 2 uses a frequency domain resource or a frequency domain location indicated by the freq 2. In addition, the freq 3 has no transmission configuration information that is explicitly associated with the freq 3, which indicates that a terminal device that needs to perform repeated transmission for a quantity of times greater than or equal to the threshold 1 uses a frequency domain resource indicated by the freq 3.

| Frequency domain information | Transmission configuration information |
|---|---|
| freq 1 | hreshold 0 |
| freq 2 | hreshold 1 |
| freq 3 | |

In another example, as shown in the following table, the configuration information set includes three pieces of frequency domain information (freq 1, freq 2, and freq 3) and two pieces of transmission configuration information (thresholds of the quantity of repeated transmission times threshold 0 and threshold 1). An association relationship is not that a piece of frequency domain information among the freq 1, the freq 2, and the freq 3 corresponds to a threshold of the quantity of repeated transmission times, but is that the three pieces of frequency domain information are associated with the two thresholds of the quantity of repeated transmission times threshold 0 and threshold 1 as a whole. Specifically, a terminal device that needs to perform repeated transmission for a quantity of times less than or equal to the threshold 0 uses a frequency domain resource or a frequency domain location indicated by the freq 1; a terminal device that needs to perform repeated transmission for a quantity of times between the threshold 0 and the threshold 1 uses a frequency domain resource or a frequency domain location indicated by the freq 2; and a terminal device that needs to perform repeated transmission for a quantity of times greater than or equal to the threshold 1 uses a frequency domain resource or a frequency domain location indicated by the freq 3.

| Frequency domain information | Transmission configuration information |
|---|---|
| freq 1, freq 2, and freq 3 | hreshold 0 and threshold 1 |

### (4) Level of a quantity of repeated transmission times

The transmission configuration information may indicate a level of a quantity of repeated transmission times, and the level of the quantity of repeated transmission times is used to represent a level or a grade of a quantity of transmission times. Correspondingly, that a piece of frequency domain information is associated with the transmission configuration information indicates that a terminal device that needs to perform repeated transmission for a quantity of repeated transmission times at the level or the grade uses a frequency domain resource or a frequency domain location indicated by the frequency domain information.

Optionally, each level of a quantity of repeated transmission times may correspond to a quantity of repeated transmission times, an interval of a quantity of repeated transmission times, or whether repeated transmission is required.

In an example, each piece of frequency domain information in the configuration information set may be explicitly associated with a level of a quantity of repeated transmission times, which indicates that a terminal device that needs to perform repeated transmission for a quantity of repeated transmission times at the level uses a frequency domain resource or a frequency domain location indicated by the associated frequency domain information.

In another example, as shown in the following table, the configuration information set includes three pieces of frequency domain information (freq 1, freq 2, and freq 3) and two pieces of transmission configuration information (quantities of repeated transmission times equals to repl-0 and repl-1). The freq 1 is associated with the level of a quantity of repeated transmission times repl-0, which indicates that a terminal device that needs to perform repeated transmission for a quantity of repeated transmission times at the level repl-0 uses a frequency domain resource or a frequency domain location indicated by the freq 1. The freq 3 is associated with the level of a quantity of repeated transmission times repl-1, which indicates that a terminal device that needs to perform repeated transmission for a quantity of repeated transmission times at the level repl-3 uses a frequency domain resource or a frequency domain location indicated by the freq 3. A terminal device that needs to perform repeated transmission for another quantity of repeated transmission times at another level uses a frequency domain resource indicated by the freq 2. In this example, the freq 2 is implicitly associated with transmission configuration information.

| Frequency domain information | Transmission configuration information |
|---|---|
| freq 1 | repl-0 |
| freq 2 | |
| freq 3 | repl-1 |

### (5) Coverage enhancement level

A coverage enhancement level is used to identify a degree of coverage enhancement, and different coverage enhancement levels may resist different signal attenuation. Therefore, a corresponding quantity of times of repeated transmission between the network device and the terminal device may be selected based on a coverage enhancement level of the terminal device. Therefore, the coverage enhancement level may indicate whether repeated transmission is required, a quantity of repeated transmission times, or an interval of a quantity of repeated transmission times.

The coverage enhancement level is the transmission configuration information. Correspondingly, that a piece of frequency domain information is associated with the transmission configuration information indicates that a terminal device that is at the coverage enhancement level uses a frequency domain resource or a frequency domain location indicated by the frequency domain information, and the terminal device performs information transmission in the frequency domain resource or the frequency domain location based on a repeated transmission manner indicated by the coverage enhancement level.

In an example, as shown in the following table, the configuration information set includes three pieces of frequency domain information (freq 1, freq 2, and freq 3) and two pieces of transmission configuration information (coverage enhancement levels cel 0 and cel 1). The freq 1 is associated with the coverage enhancement level cel 0, which indicates that a terminal device at the cel 0 uses a frequency domain resource or a frequency domain location indicated by the freq 1. The freq 3 is associated with the coverage enhancement level cel 1, which indicates that a terminal device at the cel 1 uses a frequency domain resource or a frequency domain location indicated by the freq 3. A terminal device at another coverage enhancement level uses a frequency domain resource or a frequency domain location indicated by the freq 2. In this example, the freq 2 is implicitly associated with transmission configuration information.

| Frequency domain information | Transmission configuration information |
|---|---|
| freq 1 | cel 0 |
| freq 2 | |
| freq 3 | cel 1 |

Each piece of the foregoing information is transmission configuration information related to repeated transmission. By using one or more pieces of the information, the terminal device may select, based on a requirement of repeated transmission, frequency domain information associated with a repeated transmission configuration required by the terminal device, to perform information transmission with the network device in a frequency domain resource or a frequency domain location indicated by the frequency domain information and based on transmission configuration information required by the terminal device. In this way, the terminal device can perform information transmission based on the configuration of repeated transmission actually required by the terminal device, to prevent the network device from using a same configuration of repeated transmission for different terminal devices in a cell, thereby improving resource utilization and reducing power consumption of the network device and the terminal device.

For example, there are two terminal devices, namely, a terminal device 1 and a terminal device 2, in a cell served by a network device. The terminal device 1 is located in a cell center, and the terminal device 2 is located at a cell edge. The network device may send a paging message to the terminal device 1 in a non-repeated transmission manner in a frequency domain resource associated with transmission configuration information indicating that repeated transmission is not required, and send a paging message to the terminal device 2 in a repeated transmission manner in a frequency domain resource associated with transmission configuration information indicating that repeated transmission is required. In this way, excessive consumption of time-frequency resources caused because both the terminal device 1 and the terminal device 2 perform repeated transmission is avoided.

In addition to the foregoing transmission configuration information related to repeated transmission, the transmission configuration information further includes the following information related to a DRX cycle.

### (6) DRX cycle

The transmission configuration information may indicate a DRX cycle. Correspondingly, that a piece of frequency domain information is associated with the transmission configuration information indicates that a terminal device that applies the DRX cycle uses a frequency domain resource or a frequency domain location indicated by the frequency domain information.

In an example, each piece of frequency domain information in the configuration information set may be explicitly associated with a DRX cycle, which indicates that a terminal device that applies the DRX cycle uses a frequency domain resource or a frequency domain location indicated by the associated frequency domain information.

In another example, as shown in the following table, the configuration information set includes three pieces of frequency domain information (freq 1, freq 2, and freq 3) and two pieces of transmission configuration information (DRX cycles drx-cycle 0 and drx-cycle 1). The freq 1 is associated with the DRX cycle drx-cycle 0, which indicates that a terminal device that applies the drx-cycle 0 uses a frequency domain resource or a frequency domain location indicated by the freq 1. The freq 3 is associated with the DRX cycle drx-cycle 1, which indicates that a terminal device that applies the drx-cycle 1 uses a frequency domain resource or a frequency domain location indicated by the freq 3. A terminal device that needs to apply another DRX cycle uses a frequency domain resource indicated by the freq 2. In this example, the freq 2 is implicitly associated with transmission configuration information.

| Frequency domain information | Transmission configuration information |
|---|---|
| freq 1 | drx-cycle 0 |
| freq 2 | |
| freq 3 | drx-cycle 1 |

### (7) DRX cycle threshold

The transmission configuration information may indicate a DRX cycle threshold, and the DRX cycle threshold is used to represent an interval of a DRX cycle. Correspondingly, that a piece of frequency domain information is associated with the transmission configuration information indicates that a DRX cycle within the interval of the DRX cycle represented by the threshold is applied in a frequency domain resource or a frequency domain location indicated by the frequency domain information.

Optionally, the DRX cycle threshold may be an upper limit of the represented interval, and/or a lower limit of the represented interval.

In an example, as shown in the following table, the configuration information set includes three pieces of frequency domain information (freq 1, freq 2, and freq 3) and two pieces of transmission configuration information (DRX cycle thresholds drx-threshold 0 and drx-threshold 1). The freq 1 is associated with the threshold drx-threshold 0, which indicates that a terminal device that needs to apply a DRX cycle whose value is less than or equal to the threshold 0 uses a frequency domain resource or a frequency domain location indicated by the freq 1. The freq 2 is associated with a threshold drx-threshold 1, which indicates that a terminal device that needs to apply a DRX cycle whose value is between the drx-threshold 0 and the drx-threshold 1 uses a frequency domain resource or a frequency domain location indicated by the freq 2. In addition, the freq 3 has no transmission configuration information that is explicitly associated with the freq 3, which indicates that a terminal device that needs to apply a DRX cycle whose value is greater than or equal to the threshold 1 uses a frequency domain resource or a frequency domain location indicated by the freq 3.

| Frequency domain information | Transmission configuration information |
|---|---|
| freq 1 | drx-threshold 0 |
| freq 2 | drx-threshold 1 |
| freq 3 | |

In another example, as shown in the following table, the configuration information set includes three pieces of frequency domain information (freq 1, freq 2, and freq 3) and two pieces of transmission configuration information (DRX cycle thresholds drx-threshold 0 and drx-threshold 1). An association relationship is not that a piece of frequency domain information among the freq 1, the freq 2, and the freq 3 corresponds to a DRX cycle threshold, but is that the three pieces of frequency domain information are associated with the two DRX cycle thresholds drx-threshold 0 and drx-threshold 1 as a whole. Specifically, a terminal device that needs to apply a DRX cycle whose value is less than or equal to the drx-threshold 0 uses a frequency domain resource or a frequency domain location indicated by the freq 1; a terminal device that needs to apply a DRX cycle whose value is between the drx-threshold 0 and the drx-threshold 1 uses a frequency domain resource or a frequency domain location indicated by the freq 2; and a terminal device that needs to apply a DRX cycle whose value is greater than or equal to the drx-threshold 1 uses a frequency domain resource or a frequency domain location indicated by the freq 3.

| Frequency domain information | Transmission configuration information |
|---|---|
| freq 1, freq 2, and freq 3 | drx-threshold 0 and drx-threshold 1 |

The two pieces of the foregoing information are the transmission configuration information related to a DRX cycle. By using one or more pieces of the information, the terminal device may select, based on a requirement of the DRX cycle, frequency domain information associated with a DRX cycle configuration required by the terminal device, to perform information transmission with the network device in a frequency domain resource or a frequency domain location indicated by the frequency domain information and based on transmission configuration information required by the terminal device. In this way, the terminal device can perform information transmission based on the configuration of the DRX cycle actually required by the terminal device, to prevent different terminal devices in a cell from using a same DRX cycle, thereby reducing power consumption of a terminal device that requires a long DRX cycle.

For example, if a terminal device has a high requirement on power consumption, the network device may transmit information to the terminal device based on a long DRX cycle in a frequency domain resource associated with the long DRX cycle, to reduce power consumption of the terminal device.

In addition to the foregoing transmission configuration information, the transmission configuration information further includes the following information related to a paging cycle.

### (8) Paging cycle

The transmission configuration information may indicate a paging cycle. Correspondingly, that a piece of frequency domain information is associated with the transmission configuration information indicates that a terminal device that applies the paging cycle uses a frequency domain resource or a frequency domain location indicated by the frequency domain information.

In an example, each piece of frequency domain information in the configuration information set may be explicitly associated with a paging cycle, which indicates that a terminal device that applies the paging cycle uses a frequency domain resource or a frequency domain location indicated by the associated frequency domain information.

In another example, as shown in the following table, the configuration information set includes three pieces of frequency domain information (freq 1, freq 2, and freq 3) and two pieces of transmission configuration information (paging cycles paging-cycle 0 and paging-cycle 1). The freq 1 is associated with the paging cycle paging-cycle 0, which indicates that a terminal device that applies the paging-cycle 0 uses a frequency domain resource or a frequency domain location indicated by the freq 1. The freq 3 is associated with the paging cycle paging-cycle 1, which indicates that a terminal device that applies the paging-cycle 1 uses a frequency domain resource or a frequency domain location indicated by the freq 3. A terminal device that needs to apply another paging cycle uses a frequency domain resource or a frequency domain location indicated by the freq 2. In this example, the freq 2 is implicitly associated with transmission configuration information.

| Frequency domain information | Transmission configuration information |
|---|---|
| freq 1 | paging-cycle 0 |
| freq 2 | |
| freq 3 | paging-cycle 1 |

### (9) Paging cycle threshold

The transmission configuration information may indicate a paging cycle threshold, and the paging cycle threshold is used to represent an interval of a paging cycle. Correspondingly, that a piece of frequency domain information is associated with the transmission configuration information indicates that a paging cycle within the interval of the paging cycle represented by the threshold is applied in a frequency domain resource or a frequency domain location indicated by the frequency domain information.

Optionally, the paging cycle threshold may be an upper limit of the represented interval, and/or a lower limit of the represented interval.

In an example, as shown in the following table, the configuration information set includes three pieces of frequency domain information (freq 1, freq 2, and freq 3) and two pieces of transmission configuration information (paging cycle thresholds pc-threshold 0 and pc-threshold 1). The freq 1 is associated with the threshold pc-threshold 0, which indicates that a terminal device that needs to apply a paging cycle whose value is less than or equal to the pc-threshold 0 uses a frequency domain resource or a frequency domain location indicated by the freq 1. The freq 2 is associated with the threshold pc-threshold 1, which indicates that a terminal device that needs to apply a paging cycle whose value is between the pc-threshold 0 and the pc-threshold 1 uses a frequency domain resource indicated by the freq 2. In addition, the freq 3 has no transmission configuration information that is explicitly associated with the freq 3, which indicates that a terminal device that needs to apply a paging cycle whose value is greater than or equal to the pc-threshold 1 uses a frequency domain resource or a frequency domain location indicated by the freq 3.

| Frequency domain information | Transmission configuration information |
|---|---|
| freq 1 | paging-cycle 0 |
| freq 2 | paging-cycle 1 |
| freq 3 | |

In another example, as shown in the following table, the configuration information set includes three pieces of frequency domain information (freq 1, freq 2, and freq 3) and two pieces of transmission configuration information (paging cycle thresholds pc-threshold 0 and pc-threshold 1). An association relationship is not that a piece of frequency domain information among the freq 1, the freq 2, and the freq 3 corresponds to a paging cycle threshold, but is that the three pieces of frequency domain information are associated with the two paging cycle thresholds pc-threshold 0 and pc-threshold 1 as a whole. Specifically, a terminal device that needs to apply a paging cycle whose value is less than or equal to the pc-threshold 0 uses a frequency domain resource or a frequency domain location indicated by the freq 1; a terminal device that needs to apply a paging cycle whose value is between the pc-threshold 0 and the pc-threshold 1 uses a frequency domain resource or a frequency domain location indicated by the freq 2; and a terminal device that needs to apply a paging cycle whose value is greater than or equal to the pc-threshold 1 uses a frequency domain resource or a frequency domain location indicated by the freq 3.

| Frequency domain information | Transmission configuration information |
|---|---|
| freq 1, freq 2, and freq 3 | pc-threshold 0 and pc-threshold 1 |

The two pieces of the foregoing information are the transmission configuration information related to a paging cycle. By using one or more pieces of the information, the terminal device may select, based on a requirement of the paging cycle, frequency domain information associated with a paging cycle configuration required by the terminal device, to perform information transmission with the network device in a frequency domain resource or a frequency domain location indicated by the frequency domain information and based on transmission configuration information required by the terminal device. In this way, the terminal device can perform information transmission based on the configuration of the paging cycle actually required by the terminal device, thereby avoiding a resource waste and/or a power consumption increase.

In a possible implementation, the terminal device is in an RRC connected mode, an RRC in active mode, or an RRC idle mode.

S402: The network device receives assistance information of the terminal device, where the assistance information is used to determine target frequency domain information from the frequency domain information. Optionally, the assistance information may indicate a transmission configuration of the terminal device, and the transmission configuration may also be referred to as a preferred transmission configuration.

Optionally, the assistance information received by the network device may indicate the transmission configuration of the terminal device, and the network device may determine, based on the assistance information and the foregoing configuration information set, the target frequency domain information used for the terminal device from the foregoing frequency domain information.

The network device determines the target frequency domain information based on the configuration information set and the assistance information. Specifically, the assistance information may indicate the transmission configuration of the terminal device, and the network device may determine, based on the association relationship between the transmission configuration information and the frequency domain information that are in the configuration information set, the target frequency domain information corresponding to the assistance information.

In this application, the target frequency domain information is included in the configuration information set or the frequency domain information.

In an optional implementation, the assistance information may include at least one of the following:
(1) an indication indicating that repeated transmission is required;
(2) an indication indicating that repeated transmission is not required;
(3) a quantity of repeated transmission times;
(4) a level of a quantity of repeated transmission times;
(5) a coverage enhancement level;
(6) a DRX cycle; and
(7) a paging cycle.

For example, the foregoing assistance information is the indication indicating that repeated transmission is required, which indicates that the terminal device needs to apply repeated transmission. That the terminal device needs to apply repeated transmission may mean that the terminal device recommends that the network device apply repeated transmission, or that the terminal device requests the network device to apply repeated transmission. Details are not described again in the following.

After receiving the assistance information, the network device searches, based on the assistance information, the configuration information set for frequency domain information associated with the transmission configuration indicated by the assistance information, and uses the frequency domain information as the target frequency domain information.

For example, the assistance information includes the quantity of repeated transmission times. The terminal device sends the quantity of repeated transmission times to the network device, which indicates that the terminal device expects to repeatedly transmit information for the quantity of repeated transmission times. Assuming that the transmission configuration information included in the configuration information set is in a form of (2), that is, the transmission configuration information is the quantity of repeated transmission times, and each piece of frequency domain information in the configuration information set may be explicitly associated with a quantity of repeated transmission times, after the network device receives the quantity of repeated transmission times of the terminal device, the network device searches the configuration information set for the quantity of repeated transmission times, and uses frequency domain information associated with the quantity of repeated transmission times as the target frequency domain information. The network device then performs information transmission for the quantity of times of repeated transmission performed in a frequency domain resource or a frequency domain location indicated by the target frequency domain information.

The terminal device may indicate the preferred transmission configuration to the network device by sending the assistance information. Further, the network device may transmit information to the terminal device in an associated frequency domain resource or frequency domain location, thereby meeting an actual requirement of the terminal device, and avoiding a problem of wasting time-frequency resources and/or increasing power consumption of the terminal device.

S403: The network device sends a first message to the terminal device based on the target frequency domain information.

Optionally, the first message sent by the network device to the terminal device based on the target frequency domain information may be a message used to page the terminal device or a message used to send data to the terminal device.

In a possible implementation, the first message may be a paging message.

In a possible implementation, the first message includes downlink data.

In a possible implementation, the terminal device is in an RRC idle mode or an RRC inactive mode.

After the network device sends the configuration information set to the terminal device, the terminal device may find the target frequency domain information from the configuration information set based on the configuration information set and the assistance information of the terminal device. Further, the terminal device monitors the first message in the frequency domain resource or the frequency domain location indicated by the target frequency domain information, and the network device sends the first message in the frequency domain resource or the frequency domain location indicated by the target frequency domain information, so that the terminal device may receive the first message. In addition, the network device sends, based on the transmission configuration indicated by the assistance information, the first message in the frequency domain resource or the frequency domain location indicated by the target frequency domain information. For example, if the assistance information indicates that repeated transmission is required, the network device repeatedly transmits the first message in the frequency domain resource or the frequency domain location indicated by the target frequency domain information.

In this embodiment, the network device may learn of, based on the assistance information of the terminal device, the transmission configuration actually required by the terminal device. The network device may determine, based on the assistance information, the target frequency domain information associated with the assistance information, and send the first message to the terminal device based on the target frequency domain information and the transmission configuration associated with the target frequency domain information, so that a transmission manner of the first message matches an actual requirement of the terminal device. In this way, a problem of wasting time-frequency resources and/or increasing power consumption of the terminal device is avoided.

### Embodiment 2

Transmission configuration information in a configuration information set and assistance information that is sent by a terminal device are described above. With reference to a specific communication procedure, the following describes a process in which information is transmitted between a network device and the terminal device based on a transmission configuration set and the assistance information.

The following first describes a process in which the terminal device starts to transmit information (for example, to receive a first message) in an RRC idle mode.

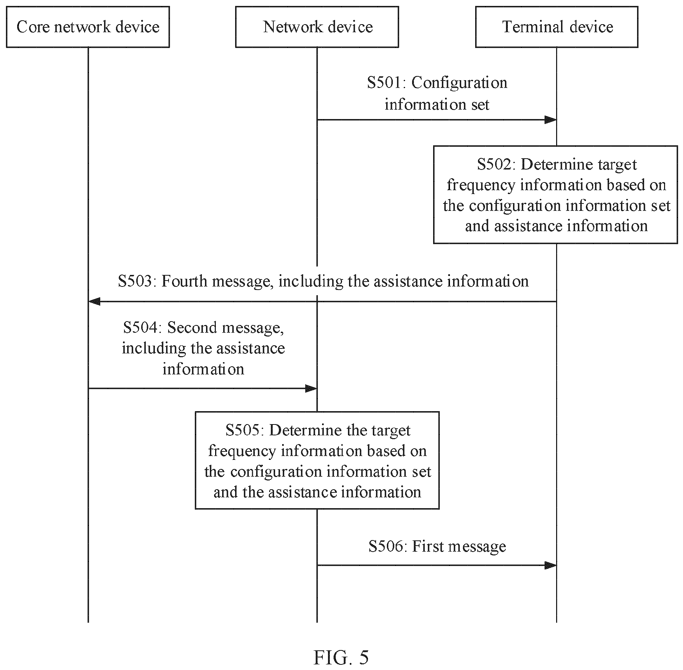

FIG. 5 is a flowchart of interaction between a network device and a terminal device. As shown in FIG. 5, an interaction process between the network device and the terminal device in which the terminal device starts to transmit the information (for example, to receive the first message) in the RRC idle mode includes the following steps.

S501: The network device sends the configuration information set to the terminal device.

Optionally, as described above, the network device may send the configuration information set to the terminal device based on a system message. For the configuration information set, refer to related descriptions in step S401. Details are not described herein again.

In a possible implementation, the terminal device is in an RRC connected mode or the RRC idle mode.

S502: The terminal device determines target frequency information based on the configuration information set and the assistance information.

The assistance information can indicate a preferred transmission configuration of the terminal device, where the assistance information may include at least one of an indication indicating whether repeated transmission is performed, a quantity of repeated transmission times, a level of a quantity of repeated transmission times, a coverage enhancement level, a DRX cycle, and a paging cycle that are described above. For details, refer to step S402. Details are not described herein again.

For example, the assistance information includes the quantity of repeated transmission times. Based on information such as a current location in a cell or a capability of the terminal device, the terminal device may determine a quantity of repeated transmission times that is suitable for the terminal device. Assuming that the transmission configuration information included in the configuration information set is in a form of (2), that is, the transmission configuration information is the quantity of repeated transmission times, and each piece of frequency domain information in the configuration information set may be explicitly associated with a quantity of repeated transmission times, the terminal device may search, based on the quantity of repeated transmission times that is suitable for the terminal device, the configuration information set for the quantity of repeated transmission times, and use frequency domain information associated with the quantity of repeated transmission times as the target frequency domain information. The terminal device may subsequently receive a message in a frequency domain resource indicated by the target frequency domain information.

In a possible implementation, in the step, the terminal device may be in the RRC connected mode or the RRC idle mode.

S503: The terminal device sends a fourth message to a core network device, where the fourth message includes the assistance information of the terminal device.

Optionally, the terminal device may send the fourth message to the network device, and the network device transparently transmits the fourth message to the core network device.

In a possible implementation, in the step, the terminal device may be in the RRC connected mode.

S504: The core network device sends a second message to the network device, where the second message includes the assistance information of the terminal device.

Optionally, the second message may be a paging message. When paging the terminal device, the core network device sends the paging message to the network device. In addition, the core network device carries the assistance information of the terminal device in the paging message.

Optionally, step S503 may be performed before step S501.

S505: The network device determines the target frequency domain information based on the assistance information in the second message and the configuration information set.

A method for determining the target frequency domain information by the network device may be the same as the method for determining the target frequency domain information by the terminal device in step S502. For a specific process, refer to descriptions of step S502. Details are not described herein again.

S506: The network device sends the first message to the terminal device based on the target frequency domain information.

In a possible implementation, the first message may be a paging message.

In a possible implementation, the first message may include downlink data.

In a possible implementation, in the step, the terminal device may be in the RRC idle mode.

In the foregoing steps, the terminal device and the network device separately determine same frequency domain information, namely, the foregoing target frequency domain information, from the configuration information set according to the same method. The network device sends the first message in a frequency domain resource or a frequency domain location indicated by the target frequency domain information and based on a transmission configuration associated with the assistance information of the terminal device. Correspondingly, the terminal device receives the first message in the frequency domain resource or the frequency domain location indicated by the target frequency domain information and based on the transmission configuration associated with the assistance information of the terminal device.

In the foregoing procedure, the terminal device may transparently transmit the assistance information to the core network device via the network device, and the assistance information is included in the second message by the core network device. For the terminal device in the RRC idle mode, the network device may determine the target frequency domain information based on the assistance information and the transmission configuration set, and sends, based on a requirement of the terminal device, the first message to the terminal device in the RRC idle mode in the frequency domain resource indicated by the target frequency domain information. In this way, time-frequency resource consumption or power consumption of the terminal device can be reduced.

### Embodiment 3

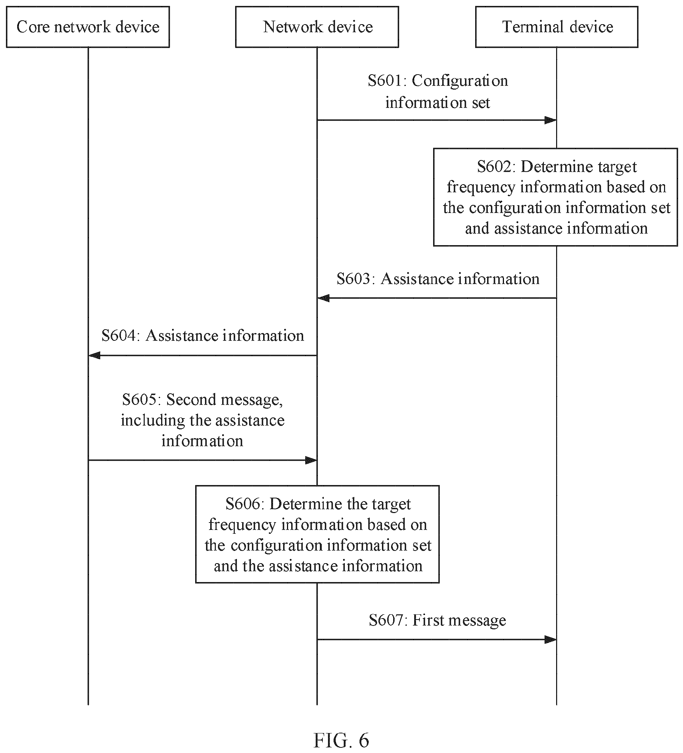

FIG. 6 is another flowchart of interaction between a network device and a terminal device. As shown in FIG. 6, another interaction process between the network device and the terminal device in which the terminal device starts to transmit the information (for example, to receive a first message) in the RRC idle mode includes the following steps.

S601: The network device sends a configuration information set to the terminal device.

S602: The terminal device determines target frequency information based on the configuration information set and assistance information.

Processing processes of steps S601 and S602 are respectively the same as processing processes of the foregoing steps S501 and S502. For details, refer to descriptions of steps S501 and S502. Details are not described herein again.

S603: The terminal device sends the assistance information of the terminal device to the network device.

After receiving the assistance information of the terminal device, the network device may store the assistance information of the terminal device.

In a possible implementation, in the step, the terminal device may be in an RRC connected mode.

S604: The network device sends the assistance information of the terminal device to a core network device.

In steps S603 and S604, after the terminal device sends the assistance information to the network device, the network device stores the assistance information, and sends the assistance information to the core network device.

S605: The core network device sends a second message to the network device, where the second message includes the assistance information of the terminal device.

Optionally, steps S603 and S604 may be performed before step S601.

S606: The network device determines the target frequency domain information based on the assistance information in the second message and the configuration information set.

S607: The network device sends the first message to the terminal device based on the target frequency domain information.

In a possible implementation, in the step, the terminal device may be in the RRC idle mode.

For processing processes of steps S605 to S607, refer to descriptions of steps S504 to S506. Details are not described herein again.

In the foregoing procedure, the terminal device sends the assistance information to the network device, the assistance information is stored and sent to the core network device by the network device, and the assistance information is included in the second message by the core network device. For the terminal device in the RRC idle mode, the network device may determine the target frequency domain information based on the assistance information and a transmission configuration set, and sends, based on a requirement of the terminal device, the first message to the terminal device in the RRC idle mode in a frequency domain resource indicated by the target frequency domain information. In this way, time-frequency resource consumption or power consumption of the terminal device can be reduced.

### Embodiment 4

The processing process in which the terminal device starts to transmit information (for example, to receive a first message) in an RRC idle mode is described above. The network device in the foregoing FIG. 5 and FIG. 6 refers to a first network device in the following embodiment. The following describes a processing process in which the terminal device starts to transmit information (for example, to receive a first message) in an RRC inactive mode.

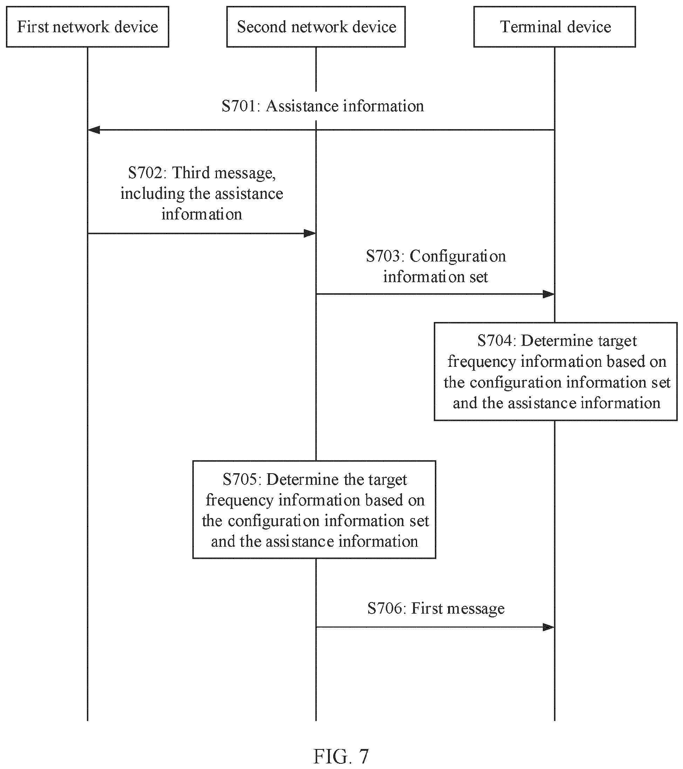

FIG. 7 is still another flowchart of interaction between a network device and a terminal device. As shown in FIG. 7, another interaction process between the network device and the terminal device in which the terminal device starts to transmit the information (for example, to receive the first message) in the RRC inactive mode includes the following steps.

S701: The terminal device sends assistance information of the terminal device to the first network device.

For details, refer to step S603. The network device in step S603 may be replaced with the first network device in step S701.

S702: The first network device sends a third message to a second network device, where the third message includes the assistance information of the terminal device.

Optionally, when the first network device receives, from a core network device, data to be sent to the terminal device, for example, downlink data of the terminal device, the first network device may send the third message to the second network device, where the third message includes the assistance information.

In this step, the first network device is a target network device that sends the third message to the second network device.

S703: The second network device sends a configuration information set to the terminal device.

Optionally, the first network device may be an anchor network device that saves context information of the terminal device, and the second network device may be a network device other than the first network device. For example, the second network device may be a network device corresponding to a current serving cell of the terminal device.

In a possible implementation, steps S703 and/or S704 may be performed before step S701.

S704: The terminal device determines target frequency information based on the configuration information set and the assistance information.

A processing process of this step is the same as a processing process of the foregoing step S502. For details, refer to descriptions of step S502. Details are not described herein again.

S705: The second network device determines the target frequency domain information based on the configuration information set and the assistance information.

A specific execution procedure is the same as a specific execution procedure of the foregoing step S505. For details, refer to descriptions of step S505. Details are not described herein again. The network device in step S505 may be replaced with the second network device in step S705.

S706: The second network device may send a first message to the terminal device based on the target frequency domain information.

A specific execution procedure of step S706 is the same as a specific execution procedure of step S506. For details, refer to descriptions of step S506. Details are not described herein again. The network device in step S506 may be replaced with the second network device in step S706.

Optionally, the first network device may be the anchor network device of the terminal device, a network device that releases the terminal device to the RRC inactive mode or an RRC idle mode, or a network device that stores the context information of the terminal device. The second network device may be a network device that currently serves the terminal device.

In the foregoing procedures, the terminal device sends the assistance information to the first network device, and the assistance information is sent to the second network device by the first network device. For the terminal device in the RRC inactive mode, the first network device and the second network device separately determine the target frequency domain information based on the assistance information and the configuration information set, and send, based on a requirement of the terminal device, the first message to the terminal device in the RRC inactive mode in a frequency domain resource indicated by the target frequency domain information. In this way, time-frequency resource consumption or power consumption of the terminal device can be reduced.

In this application, meanings of the assistance information, the configuration information set, and the frequency domain information in embodiments may be referred to each other, to avoid repetition.

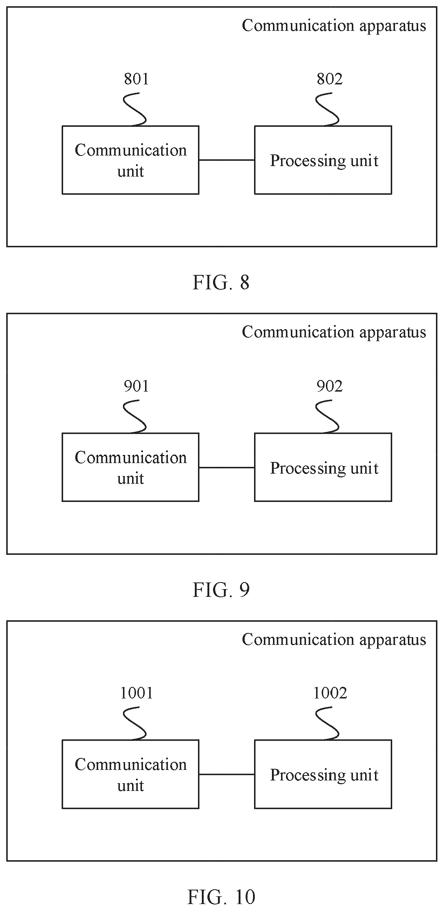

FIG. 8 is a diagram of a structure of modules of a communication apparatus provided in an embodiment of this application. The apparatus may be the foregoing network device, or may be an apparatus that enables the network device to implement a function of the network device in the methods provided in embodiments of this application. For example, the apparatus may be an apparatus or a chip system in the network device. As shown in FIG. 8, the apparatus includes a communication unit 801 and a processing unit 802.

The processing unit 802 is configured to send a configuration information set to a terminal device via the communication unit 801, where the configuration information set includes at least one piece of configuration information, the configuration information includes transmission configuration information and frequency domain information, and the transmission configuration information is associated with the frequency domain information.

The communication unit 801 is configured to receive assistance information of the terminal device, where the assistance information is used to determine target frequency domain information from the frequency domain information.

The processing unit 802 is further configured to send a first message to the terminal device via the communication unit 801 based on the target frequency domain information.

In an optional implementation, the transmission configuration information includes at least one of the following:
an indication indicating whether repeated transmission is performed, a quantity of repeated transmission times, a threshold of a quantity of repeated transmission times, a level of a quantity of repeated transmission times, a coverage enhancement level, a DRX cycle, a DRX cycle threshold, a paging cycle, and a paging cycle threshold.

In an optional possible implementation, the assistance information includes at least one of the following:
an indication indicating whether repeated transmission is performed, a quantity of repeated transmission times, a level of a quantity of repeated transmission times, a coverage enhancement level, a DRX cycle, and a paging cycle.

In an optional implementation, the communication unit 801 is further configured to:
receive the assistance information from the terminal device; receive a second message from a core network device, where the second message includes the assistance information; or receive a third message from a target network device, where the third message includes the assistance information.

In an optional possible implementation, the frequency domain information includes at least one of the following:
carrier information, BWP information, and narrowband information.

In an optional implementation, the terminal device is in an RRC idle mode or an RRC inactive mode.

FIG. 9 is a diagram of a structure of modules of another communication apparatus provided in an embodiment of this application. The apparatus may be the foregoing terminal device, or may be an apparatus that enables the terminal device to implement a function of the terminal device in the methods provided in embodiments of this application. For example, the apparatus may be an apparatus or a chip system in the terminal device. As shown in FIG. 9, the apparatus includes a communication unit 901 and a processing unit 902.

The communication unit 901 is configured to receive a configuration information set from a first network device, where the configuration information set includes at least one piece of configuration information, the configuration information includes transmission configuration information and frequency domain information, and the transmission configuration information is associated with the frequency domain information.

The processing unit 902 is configured to: determine target frequency domain information based on the configuration information set and assistance information; and receive a first message from the first network device via the communication unit 901 based on the target frequency domain information.

In an optional implementation, the transmission configuration information includes at least one of the following:
an indication indicating whether repeated transmission is performed, a quantity of repeated transmission times, a threshold of a quantity of repeated transmission times, a level of a quantity of repeated transmission times, a coverage enhancement level, a DRX cycle, a DRX cycle threshold, a paging cycle, and a paging cycle threshold.

In an optional possible implementation, the assistance information includes at least one of the following:
an indication indicating whether repeated transmission is performed, a quantity of repeated transmission times, a level of a quantity of repeated transmission times, a coverage enhancement level, a DRX cycle, and a paging cycle.

In an optional implementation, the processing unit 902 is further configured to:
send the assistance information to the first network device or a second network device via the communication unit; or send a fourth message to a core network device via the communication unit, where the fourth message includes the assistance information.

In an optional possible implementation, the frequency domain information includes at least one of the following:
carrier information, BWP information, and narrowband information.

In an optional implementation, the communication apparatus is in an RRC idle mode or an RRC inactive mode.

FIG. 10 is a diagram of a structure of modules of still another communication apparatus provided in an embodiment of this application. The apparatus may be the foregoing core network device, or may be an apparatus that enables the core network device to implement a function of the core network device in the methods provided in embodiments of this application. For example, the apparatus may be an apparatus or a chip system in the core network device. As shown in FIG. 10, the apparatus includes a communication unit 1001 and a processing unit 1002.

The communication unit 1001 is configured to receive assistance information of a terminal device, where the assistance information is used to determine target frequency domain information, and the target frequency domain information is used to send a first message.

The processing unit 1002 is configured to send a second message to a first network device via the communication unit 1001, where the second message includes the assistance information.

In an optional implementation, the communication unit 1001 is further configured to:
receive the assistance information from the first network device or a second network device; or receive a fourth message from the terminal device, where the fourth message includes the assistance information.

In an optional possible implementation, the assistance information includes at least any one of the following:
an indication indicating whether repeated transmission is performed, a quantity of repeated transmission times, a level of a quantity of repeated transmission times, a coverage enhancement level, a DRX cycle, and a paging cycle.

In an optional possible implementation, the frequency domain information includes at least any one of the following:
carrier information, BWP information, and narrowband information.

The communication apparatuses provided in embodiments of this application may perform the method steps in the foregoing method embodiments. Implementation principles and technical effects thereof are similar, and details are not described herein again.

It should be noted and understood that division into the modules of the foregoing apparatus is merely logic function division. In actual implementation, a part or all of modules may be integrated into one physical entity, or the modules may be physically separated. In addition, all these modules may be implemented in a form of software invoked by a processing element, or may be implemented in a form of hardware. Alternatively, a part of modules may be implemented in a form of software invoked by a processing element, and a part of modules are implemented in a form of hardware. For example, a determining module may be an independently disposed processing element, or may be integrated in a chip of the foregoing apparatus for implementation. In addition, the determining module may alternatively be stored in a memory of the foregoing apparatus in a form of program code and invoked by a processing element of the foregoing apparatus to perform a function of the determining module. An implementation of another module is similar to the implementation of the determining module. In addition, all or some of these modules may be integrated together, or may be implemented independently. The processing element herein may be an integrated circuit and has a signal processing capability. In an implementation process, steps in the foregoing methods or the foregoing modules can be implemented by using a hardware integrated logical circuit in the processing element, or by using instructions in a form of software.

For example, the foregoing modules may be configured as one or more integrated circuits for implementing the foregoing methods, for example, one or more application-specific integrated circuits (application-specific integrated circuits, ASICs), one or more microprocessors (digital signal processors, DSPs), or one or more field programmable gate arrays (field programmable gate arrays, FPGAs). For another example, when one of the foregoing modules is implemented by scheduling program code by a processing element, the processing element may be a general-purpose processor, for example, a central processing unit (central processing unit, CPU) or another processor that may invoke the program code. For another example, these modules may be integrated together and implemented in a form of a system-on-a-chip (system-on-a-chip, SoC).

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid-state drive (SSD)), or the like.

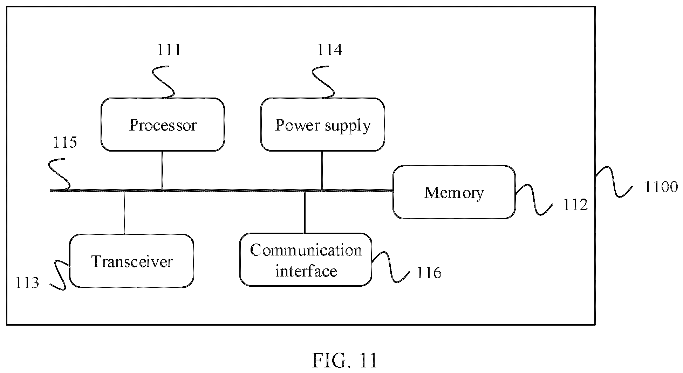

FIG. 11 is a schematic diagram of a structure of a communication apparatus provided in an embodiment of this application. The communication apparatus may be the network device, the terminal device, or the core network device in the foregoing embodiments. As shown in FIG. 11, the communication apparatus 1100 may include a processor 111 (for example, a CPU). Optionally, the apparatus may further include a memory 112 and/or a transceiver 113. The transceiver 113 is coupled to the processor 111, and the processor 111 controls sending and receiving actions of the transceiver 113. The memory 112 may store various instructions, to be configured to complete various processing functions and implement method steps performed by the network device, the terminal device, or the core network device in embodiments of this application.

Optionally, the communication apparatus in this embodiment of this application may further include a power supply 114, a system bus 115, and a communication interface 116. The transceiver 113 may be integrated into a transceiver of the communication apparatus, or may be an independent transceiver antenna of the communication apparatus. The system bus 115 is configured to implement a communication connection between components. The communication interface 116 is configured to implement connection and communication between the communication apparatus and another peripheral.

In this embodiment of this application, the processor 111 is configured to: be coupled to the memory 112, and read and execute instructions in the memory 112, to implement the method steps performed by the network device, the terminal device, or the core network device in the foregoing method embodiments. The transceiver 113 is coupled to the processor 111, and the processor 111 controls the transceiver 113 to receive and send a message. Implementation principles and technical effects thereof are similar, and details are not described herein again.

The system bus mentioned in FIG. 11 may be a peripheral component interconnect (peripheral component interconnect, PCI) bus, an extended industry standard architecture (extended industry standard architecture, EISA) bus, or the like. System buses may be classified into an address bus, a data bus, a control bus, and the like. For ease of representation, only one thick line is used to represent the bus in the figure, but this does not mean that there is only one bus or only one type of bus. The communication interface is configured to implement communication between a database access apparatus and another device (such as a client, a read/write database, or a read-only database). The memory may include a RAM, or may further include a non-volatile memory (non-volatile memory), for example, at least one magnetic disk memory.

The processor mentioned in FIG. 11 may be a general-purpose processor, including a central processing unit CPU, a network processor (network processor, NP), and the like. Alternatively, the processor may be a digital signal processor DSP, an application-specific integrated circuit ASIC, a field programmable gate array FPGA or another programmable logic device, a discrete gate or a transistor logic device, or a discrete hardware component.

Optionally, embodiments of this application further provide a readable storage medium. The storage medium stores instructions. When the instructions are executed on a computer, the computer is enabled to perform the methods in embodiments shown in FIG. 4 to FIG. 7.

Optionally, embodiments of this application further provide a chip for executing instructions. The chip is configured to perform the methods in embodiments shown in FIG. 4 to FIG. 7.

Embodiments of this application further provide a program product. The program product includes a computer program. The computer program is stored in a storage medium. At least one processor may read the computer program from the storage medium. When the at least one processor executes the computer program, the methods in embodiments shown in FIG. 4 to FIG. 7 may be implemented.

In embodiments of this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. In a formula, the character "/" indicates a "division" relationship between the associated objects. At least one of the following items (pieces) or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

It may be understood that various numeric numbers in embodiments of this application are merely for differentiation for ease of description, and are not intended to limit the scope of embodiments of this application.

It may be understood that sequence numbers of the foregoing processes do not mean execution sequences in embodiments of the present invention. The execution sequences of the processes should be determined based on functions and internal logic of the processes, and should not be construed as any limitation on the implementation processes of embodiments of this application.

## Claims

1. A communication method, comprising:
sending (S401) a configuration information set to a terminal device, wherein the configuration information set comprises at least one piece of configuration information, the configuration information comprises transmission configuration information and frequency domain information, and the transmission configuration information is associated with the frequency domain information,
receiving (S402) assistance information of the terminal device, wherein the assistance information indicates a transmission configuration of the terminal device and is used to determine target frequency domain information;
determining the target frequency domain information based on the configuration information set and the assistance information, wherein the determination of the target frequency domain information involves determining, based on the association between the transmission configuration information and frequency domain information that are in the configuration information set, the target frequency domain information corresponding to the assistance information; and
sending (S403) a paging message to the terminal device based on the target frequency domain information.

2. The method according to claim 1, wherein the transmission configuration information comprises:
a coverage enhancement level and/or a discontinuous reception, DRX, cycle.

3. The method according to claim 1 or 2, wherein the assistance information indicates the transmission configuration of the terminal device

4. The method according to any one of claims 1 to 3, further comprising:
receiving a second message from a core network device, wherein the second message comprises the assistance information.

5. The method according to any one of claims 1 to 4, wherein the frequency domain information comprises at least one of the following:
carrier information, bandwidth part, BWP, information, and narrowband information.

6. The method according to any one of claims 1 to 5, wherein the terminal device is in a radio resource control, RRC, idle mode or an RRC inactive mode.

7. A communication method, wherein the method is applicable to a terminal device or a chip of the terminal device, and comprises:
receiving (S501, S601, S703) a configuration information set from a first network device, wherein the configuration information set comprises at least one piece of configuration information, the configuration information comprises transmission configuration information and frequency domain information, and the transmission configuration information is associated with the frequency domain information;
determining (S502, S602, S704) target frequency domain information based on the configuration information set and assistance information indicative of a transmission configuration of the terminal device;
sending the assistance information to the first network device; and
receiving (S506, S607, S706) a paging message from the first network device based on the target frequency domain information.

8. The method according to claim 7, wherein the transmission configuration information comprises a coverage enhancement level and/or a discontinuous reception, DRX, cycle.

9. The method according to claim 7 or 8, wherein the assistance information indicates the transmission configuration of the terminal device.

10. The method according to any one of claims 7 to 9, wherein the frequency domain information comprises at least one of the following:
carrier information, bandwidth part, BWP, information, and narrowband information.

11. The method according to any one of claims 7 to 10, wherein the terminal device is in a radio resource control, RRC, idle mode or an RRC inactive mode.

12. A communication apparatus, comprising:
means for performing the method according to any one of claims 1 to 6.

13. A communication apparatus, comprising:
means for performing the method according to any one of claims 7 to 11.

14. A computer-readable storage medium comprising instructions which, when executed by a computer, cause the computer to carry out the method according to any one of claims 1 to 6, or cause the computer to carry out the method according to any one of claims 7 to 11.

## Patentansprüche

1. Kommunikationsverfahren, das umfasst:
Senden (S401) eines Konfigurationsinformationssatzes an ein Endgerät, wobei der Konfigurationsinformationssatz mindestens ein Konfigurationsinformationselement umfasst, die Konfigurationsinformationen Übertragungskonfigurationsinformationen und Frequenzbereichsinformationen umfassen und die Übertragungskonfigurationsinformationen mit den Frequenzbereichsinformationen verknüpft sind;
Empfangen (S402) von Unterstützungsinformationen des Endgeräts, wobei die Unterstützungsinformationen eine Übertragungskonfiguration des Endgeräts angeben und verwendet werden, um Zielfrequenzbereichsinformationen zu bestimmen;
Bestimmen der Zielfrequenzbereichsinformationen basierend auf dem Konfigurationsinformationssatz und den Unterstützungsinformationen, wobei die Bestimmung der Zielfrequenzbereichsinformationen das Bestimmen, basierend auf der Verknüpfung zwischen den Übertragungskonfigurationsinformationen und den Frequenzbereichsinformationen, die in dem Konfigurationsinformationssatz sind, der Zielfrequenzbereichsinformationen, die den Unterstützungsinformationen entsprechen, beinhaltet; und
Senden (S403) eines Funkrufs an das Endgerät basierend auf den Zielfrequenzbereichsinformationen.

2. Verfahren nach Anspruch 1, wobei die Übertragungskonfigurationsinformationen umfassen:
ein Abdeckungsverbesserungsniveau und/oder einen diskontinuierlichen Empfangs(DRX)-Zyklus.

3. Verfahren nach Anspruch 1 oder 2, wobei die Unterstützungsinformationen die Übertragungskonfiguration des Endgeräts angeben

4. Verfahren nach einem der Ansprüche 1 bis 3, das ferner umfasst:
Empfangen einer zweiten Nachricht von einer Kernnetzwerkvorrichtung, wobei die zweite Nachricht die Unterstützungsinformationen umfasst.

5. Verfahren nach einem der Ansprüche 1 bis 4, wobei die Frequenzbereichsinformationen mindestens eines der Folgenden umfassen: Trägerinformationen, Bandbreitenanteil(BWP)-Informationen und Schmalbandinformationen.

6. Verfahren nach einem der Ansprüche 1 bis 5, wobei sich das Endgerät in einem Radio-Resource-Control(RRC)-Leerlaufmodus oder einem inaktiven RRC-Modus befindet.

7. Kommunikationsverfahren, wobei das Verfahren auf ein Endgerät oder einen Chip des Endgeräts anwendbar ist und umfasst:
Empfangen (S501, S601, S703) eines Konfigurationsinformationssatzes von einer ersten Netzwerkvorrichtung, wobei der Konfigurationsinformationssatz mindestens ein Konfigurationsinformationselement umfasst, die Konfigurationsinformationen Übertragungskonfigurationsinformationen und Frequenzbereichsinformationen umfassen und die Übertragungskonfigurationsinformationen mit den Frequenzbereichsinformationen verknüpft sind;
Bestimmen (S502, S602, S704) von Zielfrequenzbereichsinformationen basierend auf dem Konfigurationsinformationssatz und den Unterstützungsinformationen, die eine Übertragungskonfiguration des Endgeräts angeben;
Senden der Unterstützungsinformationen an die erste Netzwerkvorrichtung; und
Empfangen (S506, S607, S706) eines Funkrufs von der ersten Netzwerkvorrichtung basierend auf den Zielfrequenzbereichsinformationen.

8. Verfahren nach Anspruch 7, wobei die Übertragungskonfigurationsinformationen ein Abdeckungsverbesserungsniveau und/oder einen diskontinuierlichen Empfangs(DRX)-Zyklus umfassen.

9. Verfahren nach Anspruch 7 oder 8, wobei die Unterstützungsinformationen die Übertragungskonfiguration des Endgeräts angeben.

10. Verfahren nach einem der Ansprüche 7 bis 9, wobei die Frequenzbereichsinformationen mindestens eines der Folgenden umfassen:
Trägerinformationen, Bandbreitenanteil(BWP)-Informationen und Schmalbandinformationen.

11. Verfahren nach einem der Ansprüche 7 bis 10, wobei sich das Endgerät in einem Radio-Resource-Control(RRC)-Leerlaufmodus oder einem inaktiven RRC-Modus befindet.

12. Kommunikationseinrichtung, die umfasst:
Mittel zum Durchführen des Verfahrens nach einem der Ansprüche 1 bis 6.

13. Kommunikationseinrichtung, die umfasst:
Mittel zum Durchführen des Verfahrens nach einem der Ansprüche 7 bis 11.

14. Computerlesbares Speichermedium, das Anweisungen umfasst, die, wenn sie durch einen Computer ausgeführt werden, den Computer veranlassen, das Verfahren nach einem der Ansprüche 1 bis 6 auszuführen, oder den Computer veranlassen, das Verfahren nach einem der Ansprüche 7 bis 11 auszuführen.

## Revendications

1. Procédé de communication, comprenant :
l'envoi (S401) d'un ensemble d'informations de configuration à un dispositif terminal, dans lequel l'ensemble d'informations de configuration comprend au moins un élément d'informations de configuration, les informations de configuration comprennent des informations de configuration de transmission et des informations de domaine de fréquence, et les informations de configuration de transmission sont associées aux informations de domaine de fréquence ;
la réception (S402) d'informations d'assistance du dispositif terminal, dans lequel les informations d'assistance indiquent une configuration de transmission du dispositif terminal et sont utilisées pour déterminer des informations de domaine de fréquence cible ;
la détermination des informations de domaine de fréquence cible sur la base de l'ensemble d'informations de configuration et des informations d'assistance, dans lequel la détermination des informations de domaine de fréquence cible consistent à déterminer, sur la base de l'association entre les informations de configuration de transmission et des informations de domaine de fréquence qui sont dans l'ensemble d'informations de configuration, les informations de domaine de fréquence cible correspondant aux informations d'assistance ; et
l'envoi (S403) d'un message de radiomessagerie au dispositif terminal sur la base des informations de domaine de fréquence cible.

2. Procédé selon la revendication 1, dans lequel les informations de configuration de transmission comprennent :
un niveau d'amélioration de couverture et/ou un cycle de réception discontinue, DRX.

3. Procédé selon la revendication 1 ou 2, dans lequel les informations d'assistance indiquent la configuration de transmission du dispositif terminal.

4. Procédé selon l'une quelconque des revendications 1 à 3, comprenant en outre :
la réception d'un second message en provenance d'un dispositif de réseau central, dans lequel le second message comprend les informations d'assistance.

5. Procédé selon l'une quelconque des revendications 1 à 4, dans lequel les informations de domaine de fréquence comprennent au moins l'une parmi les informations suivantes :
des informations de porteuse, des informations de partie de bande passante, BWP, et des informations de bande étroite.

6. Procédé selon l'une quelconque des revendications 1 à 5, dans lequel le dispositif terminal est en mode veille de commande de ressources radio, RRC, ou en mode inactif RRC.

7. Procédé de communication, dans lequel le procédé est applicable à un dispositif terminal ou à une puce du dispositif terminal, et comprend :
la réception (S501, S601, S703) d'un ensemble d'informations de configuration en provenance d'un premier dispositif de réseau, dans lequel l'ensemble d'informations de configuration comprend au moins un élément d'informations de configuration, les informations de configuration comprennent des informations de configuration de transmission et des informations de domaine de fréquence, et les informations de configuration de transmission sont associées aux informations de domaine de fréquence ;
la détermination (S502, S602, S704) d'informations de domaine de fréquence cible sur la base de l'ensemble d'informations de configuration et d'informations d'assistance indiquant une configuration de transmission du dispositif terminal ;
l'envoi des informations d'assistance au premier dispositif de réseau ; et
la réception (S506, S607, S706) d'un message de radiomessagerie en provenance du premier dispositif de réseau sur la base des informations de domaine de fréquence cible.

8. Procédé selon la revendication 7, dans lequel les informations de configuration de transmission comprennent un niveau d'amélioration de couverture et/ou un cycle de réception discontinue, DRX.

9. Procédé selon la revendication 7 ou 8, dans lequel les informations d'assistance indiquent la configuration de transmission du dispositif terminal.

10. Procédé selon l'une quelconque des revendications 7 à 9, dans lequel les informations de domaine de fréquence comprennent au moins l'une parmi les informations suivantes :
des informations de porteuse, des informations de partie de bande passante, BWP, et des informations de bande étroite.

11. Procédé selon l'une quelconque des revendications 7 à 10, dans lequel le dispositif terminal est en mode veille de commande de ressources radio, RRC, ou en mode inactif RRC.

12. Appareil de communication, comprenant :
un moyen permettant de réaliser le procédé selon l'une quelconque des revendications 1 à 6.

13. Appareil de communication, comprenant :
un moyen permettant de réaliser le procédé selon l'une quelconque des revendications 7 à 11.

14. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 6, ou amènent l'ordinateur à mettre en œuvre le procédé selon l'une quelconque des revendications 7 à 11.
